Europäisches Patentamt

European Patent Office

Office européen des brevets

(19)

(11) Publication number: **0 488 035 A1**

## EUROPEAN PATENT APPLICATION

(12)

(21) Application number: **91119771.3**

(22) Date of filing: **19.11.91**

(51) Int. Cl.⁵: **H04L 12/24**, H04L 12/28

(30) Priority: **30.11.90 JP 340388/90**

(43) Date of publication of application:
**03.06.92 Bulletin 92/23**

(84) Designated Contracting States:
**FR NL**

(71) Applicant: **Kabushiki Kaisha Toshiba**
**72, Horikawa-cho Saiwai-ku**
**Kawasaki-shi(JP)**

(72) Inventor: **Shimizu, Noriaki, c/o Intellectual**
**Property Div.**
**K.K. Toshiba, 1-1 Shibaura 1-chome**
**Minato-ku, Tokyo 105(JP)**

(74) Representative: **Henkel, Feiler, Hänzel &**
**Partner**
**Möhlstrasse 37**
**W-8000 München 80(DE)**

(54) Information processing apparatus with alterable network address.

(57) An information processing apparatus is connected to a LAN (Local Area Network) when in use, and is provided with a PLD (Programmable Logic Device) (44b). Accordingly, specific node address information can be externally written into the PLD while being mounted on a print circuit board. The writing of the node address information is performed under the control of a personal computer (100) as an external unit, which automatically prepares a program for the node address information to be written.

FIG. 1

EP 0 488 035 A1

The present invention relates to an information processing apparatus to be connected to a LAN (Local Area Network) when in use. More particularly, this invention is directed to an information processing apparatus such as an electronic filing apparatus which registers or retrieves image information.

Conventional node address systems of a LAN are classified into two types: global address system having a specific or fixed address for each machine or unit, and a local address system having an arbitrary address for each machine or unit.

In the global address system, different node addresses are determined for different machines or units in the production stage, and when an exclusive ROM (Read Only Memory) is used to store the addresses, the addresses are written therein before assembling the apparatus, and this ROM is then installed in the apparatus. When such an exclusive ROM is used, however, a program (node address) corresponding to each ROM should be prepared, and the preparation and management of the programs are troublesome. In addition, when an error in the value of the node address set in the production stage or the like is found out after installing the ROM, immediate correction of the error is difficult and the ROM needs to be replaced with a new one.

In this global address system, a dip switch to which the node address is stored is securely bonded to disable its resetting in order to inhibit alteration of the node address by software. In this respect too, it is difficult to change the node address when a setup error is found after installing the ROM.

It is therefore an object of the present invention to provide an information processing apparatus that is provided with a PLD (Programmable Logic Device) to which specific node address information can be written externally even when mounted on the print circuit board of each machine or unit, thereby ensuring easier and more efficiency management of a LAN node address of a global address system.

To achieve this object, an information processing apparatus according to the present invention comprises:

memory means for storing information;

a central processing unit, connected via a system bus to the memory means, for controlling information read out therefrom;

storage means having a connection terminal to be coupled to an external unit, writing and rewriting of specific node address information being performed through the connection terminal; and

means, connected to the memory means, the central processing unit and the storage means, for processing the read information and the node address information.

Since the information processing apparatus embodying the present invention with the above structure is provided with a PLD to which specific node address information can be written externally even when mounted on the print circuit board of each machine or unit, writing and rewriting of a program becomes easier, thus improving the degree of freedom to set the node address information.

This invention can be more fully understood from the following detailed description when taken in conjunction with the accompanying drawings, in which:

Fig. 1 is a schematic structural diagram illustrating an electronic filing apparatus as an example of an information processing apparatus;

Fig. 2 is a block diagram illustrating an electronic filing apparatus according to one embodiment of the present invention; and

Fig. 3 is a diagram illustrating how a LAN address register is connected to a personal computer in writing or rewriting node address information according to the embodiment of the present invention.

A preferred embodiment of the present invention will now be described referring to the accompanying drawings.

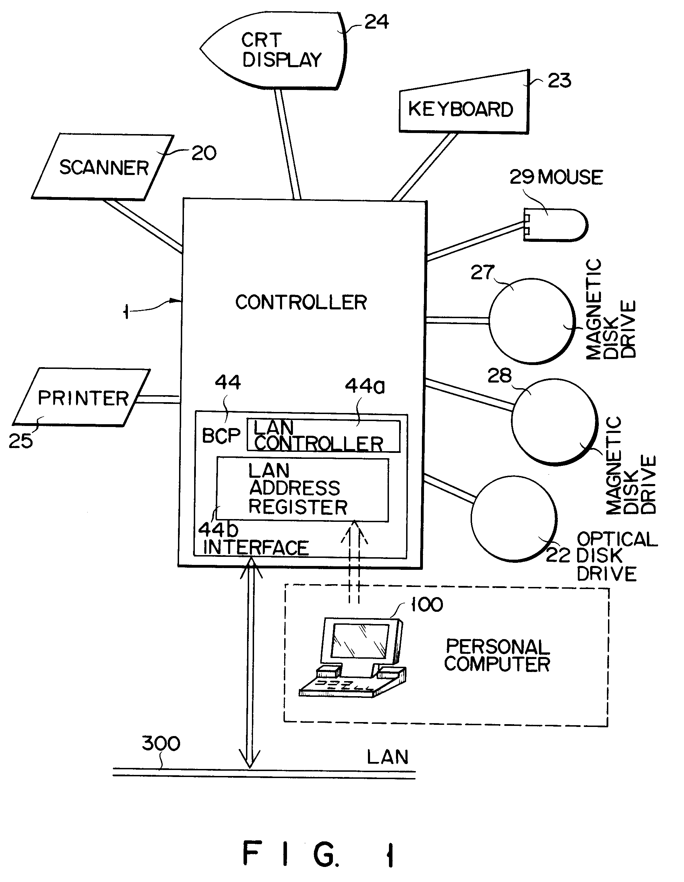

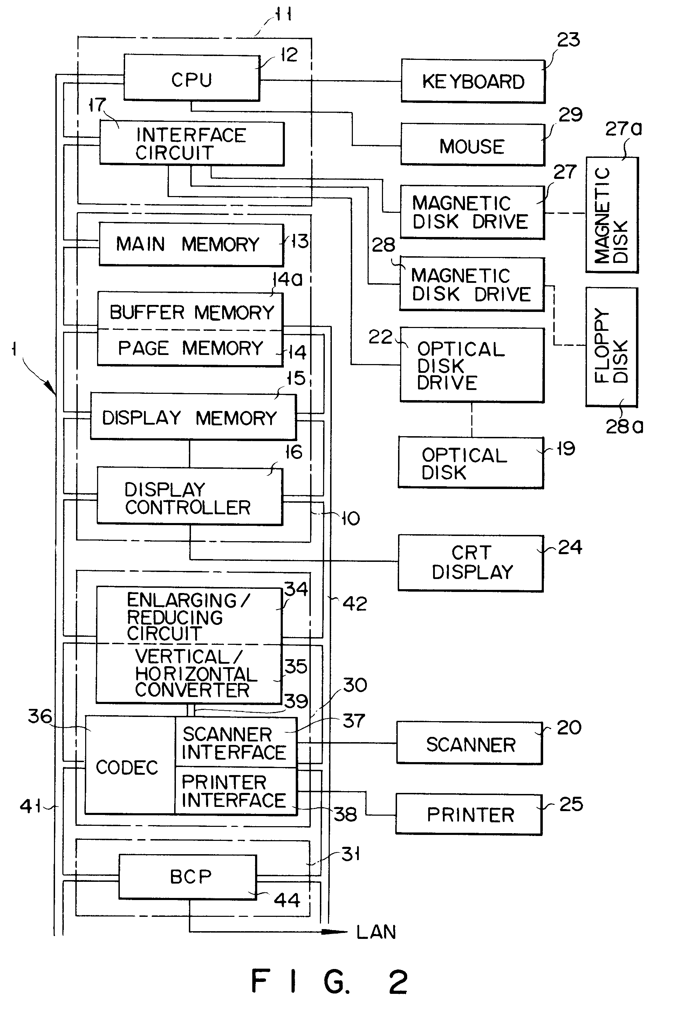

Figs. 1 and 2 exemplify an electronic filing apparatus as an information processing apparatus embodying the present invention.

The electronic filing apparatus comprises a controller 1 to which a scanner 20, an optical disk drive 22, a keyboard 23, a CRT display 24, a printer 25, magnetic disk drives 27 and 28, a mouse 29, etc. are connected. The controller 1 comprises a memory module 10, a control module 11, an image processing module 30, a communication control module 31, a system bus 41, and an image bus 42.

The control module 11 includes a CPU 12 which executes various controls to store, retrieve and edit image data (image information), and an interface circuit 17 for connecting the optical disk drive 22 and the magnetic disk drives 27 and 28 to the CPU 12.

The keyboard 23 and the mouse 29 are connected to the CPU 12.

The memory module 10 includes a main memory 13 which stores various control programs and data to store and retrieve the image data, a page memory 14 as an image memory having a memory capacity to store several A4-size pages of image data, a display memory 15 and a display controller 16, the last two serving as a display interface.

A buffer memory 14a is provided in a part of page memory 14. The write and read access to the buffer memory 14a is controlled by a counter (not shown).

The page memory 14 is a memory which temporarily stores image data that is to be written on or read from an optical disk 19, for example.

The display memory 15 temporarily stores the image data to be displayed on a CRT display 24. The display memory 15 holds the image data which is actually displayed in a display window on the CRT display 24, or the image data of the page memory 14, on which enlarging, reducing rotating, inserting or highlighting is performed.

The display controller 16 controls the CRT display 24 in a display process.

The image processing module 30 includes an enlarging/reducing circuit 34 which enlarges or reduces image data, a vertical/horizontal converter 35 which performs vertical/horizontal conversion on image data in a rotation process, a compressing/expanding circuit (CODEC) 35 which performs coding for compression of image data (reducing data redundancy) and decoding for data expansion (recovering the reduced redundancy), a scanner interface 37 for the scanner 20, a printer interface 38 for the printer 25, and an internal bus 39 by which the enlarging/reducing circuit 34 and the vertical/horizontal converter 35 are connected to the CODEC 36, the scanner interface 37 and the printer interface 38.

The communication control module 31 includes a communication interface 44, such as a BCP (Bus Communication Processor) serving as a LAN controller to be connected to, for example, a LAN 300 in Fig. 1.

The communication interface 44 has a LAN controller 44a and a LAN address register 44b for storing a LAN node address (node address information) of a global address system (Fig. 1). The LAN address register 44b comprises a PLD (Programmable Logic Device) of on-board write type, for example, into which, when actually mounted on a print circuit board, a program (node address data) can be written by an external personal computer 100.

The communication control module 31 may have an UPC (Universal Communication Processor) which is connected through an interface (RS-232C, GPIB or SCSI) to an external device, such as an FCP (Facsimile Connection Processor) or a personal computer.

The system bus 41 is a bus for control signals which connects the control module 11 to the memory module 10, image processing module 30 and communication control module 31.

The image bus 42 is a bus for image data, by which the memory module 10, the image processing module 30 and the communication control module 31 are connected to one another.

The scanner 20 is a two-dimensional scanner, for example, which two-dimensionally scans the document with laser beams, providing an electric signal according to the image data of the document.

The optical disk drive 22 stores the image data read by the scanner 20, or code data read from a floppy disk 28a through the magnetic disk drive 28, on the optical disk 19 piece by piece. The optical disk drive 22 also accesses the optical disk 19 to retrieve retrieval information specified through the keyboard 23 or the like, or image data corresponding to display attribute information, such as the image size, the image direction, and the number of pages.

The keyboard 23 is a data input device as a man-machine interface, which, when operated, enters specific retrieval information corresponding to information that includes code data and image data to be written on the optical disk 19, and various operation commands concerning data storage, retrieval, and edition.

The mouse 29 is an input device which arbitrarily moves a cursor (not shown) up and down or side by side in a display window on the CRT display 24, for example, and gives an instruction at the desired cursor position to select or instruct the display contents (various modes, region selection to edit an image or icons) specified by the cursor.

The CRT display 24 is, for example, a cathode ray tube display device. Displayed on the CRT display 24 is the image data read by the scanner 20, the code data read from the magnetic disk drive 28, or the code data and the image data read from the optical disk drive 22. The CRT display 24 is a multi-window type display, which can display four different image data using four windows at the maximum in its image-data display area. Edition, such as enlargement, reduction, rotation or scrolling, can be performed separately on those pieces of image data displayed in the individual windows.

The printer 25 prints out image data read out by the scanner 20, the code data read out from the floppy disk 28a, the code data and image data read out from the optical disk 19, image data displayed on the CRT display 24, or the like, i.e., it provides a hard copy of such image data.

The magnetic disk drive 27 is a hard disk drive to which a magnetic disk 27a is installed. In this magnetic disk 27a are stored as a data base (DB) various programs in addition to retrieval information entered through the keyboard 23, and retrieval and display data (management data), which includes a memory address on the optical disk 19 where code data and image data for one item corresponding to this retrieval information are to be stored, the data size, a flag identifying whether the data is code data or image data, and display attribute information such as the image size, image direction and rotational angle. This retrieval and display data is read out from the optical disk 19 and stored on the magnetic disk 27a when the optical disk 19 is loaded.

The memory address is a logical address from which the physical track address and physical sector address are computed when the optical disk 19 is accessed.

The magnetic disk drive 28 is a floppy disk drive for a 5.25-in. floppy disk, for example. This disk drive 28 accesses the floppy disk 28a to read out therefrom a text file (document) prepared by a word processor (not shown), and a CAD drawing file and a code data file such as a work sheet file (drawing data), which are prepared by the personal computer 100 or the like.

Different floppy disks 28a are set in association with various types of OS's (Operating Systems).

The personal computer 100 serves mainly to write a LAN node address into the LAN address register 44b, and automatically prepares a program to be written.

A description will now be given of how to write the LAN node address into the LAN address register 44b.

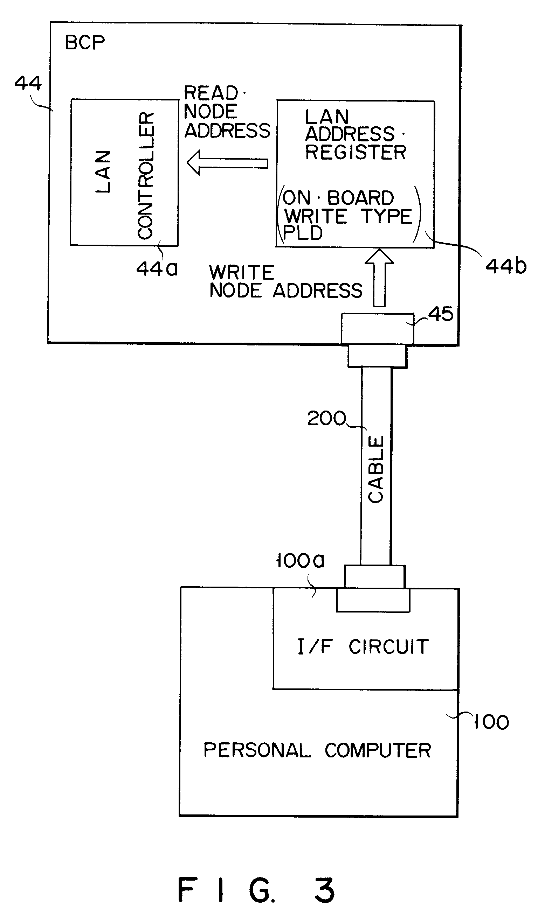

Fig. 3 illustrates how the LAN address register 44b is connected to the personal computer 100 at the time of writing or rewriting a LAN node address.

Referring to Fig. 3, the LAN controller 44a reads out a LAN node address from the LAN address register 44b to control LAN communication.

As the LAN address register 44b is constituted of a on-board write type PLD as described earlier, a LAN node address can be written into the register 44b while the register 44b is mounted on the print circuit board.

The personal computer 100 writes a LAN node address into the LAN address register 44b via a connector 45, and has an interface circuit (I/F circuit) 100a for connection to the aforementioned communication interface 44. At the time a LAN node address is written into the LAN address register 44b, this I/F circuit 100a is coupled to the register 44b via a cable 200.

When writing the LAN node address into the LAN address register 44b, the personal computer 100 automatically prepares a program with the LAN node address incremented, so that it can always write a different LAN node address into the register 44b.

In writing a LAN node address into the LAN address register 44b, therefore, the personal computer 100 is connected via the cable 200 to the register 44b. And the LAN address register 44b is programmed by the personal computer 100, i.e., the LAN node address produced by the personal computer 100 is written in the register 44b. As a result, the LAN node address specific to this electronic filing apparatus is stored in the LAN address register 44b.

As described above, writing and rewriting of a program into the LAN address register 44b can be externally performed while the register is mounted on the print circuit board.

In other words, an on-board write type PLD is provided as a storage device for a LAN node address, and the LAN node address is written therein by the personal computer. This design can permit the storage device while mounted on the print circuit board to be freely programmed externally, and can facilitate its reprogramming. The degree of freedom in setting a LAN node address can therefore be improved so that a setup error can flexibly coped with without requiring replacement of the storage device.

In addition, as the storage device is programmable by the personal computer, or the LAN node address is automatically prepared using the computer, global address management is easy and a setup error will not easily occur.

The present invention is not limited to the above-described embodiment, but may be modified in various manners without departing from the scope and spirit of the invention.

**Claims**

1. An information processing apparatus characterized by comprising:

   memory means (13) for storing at least items of information retrieved from another apparatus through a LAN, in accordance with a node address assigned to the information processing apparatus;

   a central processing unit (12), connected by a system bus to said memory means, for processing the items of information read out from said memory means, in a predetermined sequence;

   means (44b) having a connection terminal to be coupled to an external unit and for storing the node address supplied through the connection terminal and for rewriting the node address;

   means (16, 34, 35, 36), connected to said memory means, said central processing unit and said storage means, for processing said read information from said memory means.

2. An information processing apparatus according to claim 1, characterized in that said storage means is an on-board write type PLD (Programmable Logic Device) (44b).

3. An information processing apparatus according to claim 1, characterized in that said external unit (100) is a personal computer.

4. A system of managing an information processing apparatus characterized by comprising:

an information processing apparatus including memory means (13) for storing information, a central processing unit for controlling information read out said memory means, storage means to which writing and rewriting of specific node address information is performed, and means for processing said read information and said node address information; and

an external unit including a personal computer (100) connected to said information processing apparatus;

said writing and rewriting of specific node address information in said storage means of said information processing apparatus being executed in accordance with programs for said storage means automatically and sequentially prepared by said personal computer.

CRT
DISPLAY 24

KEYBOARD 23

SCANNER 20

29 MOUSE

CONTROLLER

1

27 MAGNETIC
DISK
DRIVE

44 44a

PRINTER

25

BCP LAN
CONTROLLER

LAN
ADDRESS
REGISTER

44b
INTERFACE

28 MAGNETIC
DISK
DRIVE

22 OPTICAL
DISK
DRIVE

100

PERSONAL
COMPUTER

300

LAN

# F I G. 1

F I G. 2

F I G.  3

# EUROPEAN SEARCH REPORT

**European Patent Office**

**Application Number**

EP 91 11 9771

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 346 614 (GEBR. MERTEN GMBH & CO. KG)<br>* column 2, line 25 - line 38 *<br>* column 6, line 12 - line 31 *<br>* column 6, line 58 - column 7, line 13 *<br>* column 10, line 20 - line 38 * | 1-4 | H04L12/24<br>H04L12/28 |
| A | WO-A-8 904 578 (ECHELON SYSTEMS)<br>* page 3, line 5 - page 4, line 2 *<br>* page 13, line 16 - page 14, line 5 *<br>* page 23, line 6 - line 21 *<br>* page 29, line 9 - page 30, line 18 *<br>* page 32, line 18 - page 33, line 2 *<br>* page 48, line 1 - page 51, line 12 *<br>* page 137, line 15 - page 138, line 9 * | 1-4 | |

**TECHNICAL FIELDS SEARCHED (Int. Cl.5 )**

G06F
H04L

The present search report has been drawn up for all claims

| Place of search | Date of completion of the search | Examiner |
|---|---|---|
| THE HAGUE | 11 FEBRUARY 1992 | MESSELKEN M. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)